(19) **Europäisches Patentamt / European Patent Office / Office européen des brevets**

(11) **EP 1 579 909 B1**

(12) **FASCICULE DE BREVET EUROPEEN**

(45) Date de publication et mention de la délivrance du brevet:
**16.04.2008 Bulletin 2008/16**

(51) Int Cl.:
*B01J 23/24* *(2006.01)*     *B01J 23/85* *(2006.01)*
*B01J 23/88* *(2006.01)*     *C10G 45/04* *(2006.01)*
*B01J 21/04* *(2006.01)*

(21) Numéro de dépôt: **05290587.4**

(22) Date de dépôt: **16.03.2005**

(54) **Procédé d'hydrotraitement et d'hydroconversion de fractions pétrolières contenant des métaux en présence d'un catalyseur supporté de forme shpérique dopé avec du phosphore.**

Wasserstoffbehandlung und Hydrokonversion von Metall enthaltenden Petroleumfraktionen mit einem kugelförmigen phosphordotierten Trägerkatalysator

Hydrotreating and hydroconverting of heavy petroleum fractions in the presence of a spherical supported catalyst doped by phosphorus

(84) Etats contractants désignés:
**BE DE DK GB NL**

(30) Priorité: **23.03.2004 FR 0402980**

(43) Date de publication de la demande:
**28.09.2005 Bulletin 2005/39**

(73) Titulaire: **Institut Français du Pétrole**
**92852 Rueil Malmaison Cédex (FR)**

(72) Inventeurs:
• **Guilaume, Denis**
**38200 Vienne (FR)**
• **Kressmann, Stéphane**
**69360 Serezin du Rhone (FR)**
• **Roy, Magalie**
**38300 Vermelle (FR)**

(56) Documents cités:
**EP-A- 0 098 764**     **EP-A- 0 297 950**
**FR-A- 2 787 040**     **FR-A- 2 830 870**
**US-A- 4 874 506**

Remarques:
Le dossier contient des informations techniques présentées postérieurement au dépôt de la demande et ne figurant pas dans le présent fascicule.

EP 1 579 909 B1

**Description**

**DOMAINE TECHNIQUE**

La présente invention se rapporte à un catalyseur comprenant un support sous forme de billes à base d'alumine, au moins un métal catalytique ou un composé de métal catalytique du groupe VIB (colonne 6 de la nouvelle notation de la table périodique des éléments), éventuellement au moins un métal catalytique ou un composé de métal catalytique du groupe VIII (colonnes 8, 9, et 10 de la nouvelle notation de la table périodique des éléments), dont la structure poreuse se compose d'une pluralité d'agglomérats juxtaposés, formés chacun d'une pluralité de plaquettes aciculaires, les plaquettes de chaque agglomérat étant orientées généralement radialement les unes vis-à-vis des autres et par rapport au centre de l'agglomérat, ledit catalyseur étant caractérisé en ce qu'il renferme en outre du phosphore comme élément dopant.

La présente invention concerne également un procédé de préparation dudit catalyseur.

La présente invention concerne également l'utilisation dudit catalyseur dans les procédés de conversion de charges hydrocarbonées contenant des métaux.

**ART ANTÉRIEUR**

Il est connu de l'homme du métier que lors des réactions d'hydroraffinage et/ou d'hydroconversion de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous forme d'un sulfure solide qui vient se fixer sur la surface interne des pores. C'est en particulier le cas des complexes du vanadium, du nickel, du fer, du sodium, du titane, du silicium, et du cuivre qui sont naturellement présents dans les pétroles bruts en plus ou moins grande abondance selon l'origine du pétrole, et qui, lors des opérations de distillation, ont tendance à se concentrer dans les fractions à point d'ébullition élevé et en particulier dans les résidus. C'est aussi le cas des liquéfiats de charbon qui renferment des métaux en particulier du fer et du titane. Le terme général hydrodémétallation est utilisé pour désigner les réactions de destruction ou de déaggrégation des complexes organo-métalliques dans les hydrocarbures.

L'accumulation des dépôts solides dans les pores du catalyseur peut se poursuivre jusqu'au bouchage complet d'une partie des pores commandant l'accès des réactifs à une fraction du réseau poreux interconnecté de telle sorte que cette fraction devient inactive alors même que les pores de cette fraction sont seulement faiblement encombrés ou même intacts. Ce phénomène peut donc provoquer une désactivation prématurée et très importante du catalyseur. Il est particulièrement sensible dans le cas des réactions d'hydrodémétallation en présence d'un catalyseur hétérogène supporté. Par hétérogène, on entend non soluble dans la charge d'hydrocarbures. On constate en effet dans ce cas que les pores de la périphérie s'obstruent plus vite que les pores centraux. De même, les bouches des pores s'obstruent plus vite que leurs autres parties. L'obstruction des pores va de pair avec une réduction progressive de leur diamètre, ce qui entraîne une limitation accrue de la diffusion des molécules et une accentuation du gradient de concentration, donc une accentuation de l'hétérogénéité du dépôt depuis la périphérie vers l'intérieur des particules poreuses au point que l'obstruction complète des pores débouchant à l'extérieur se produit très rapidement : l'accès à la porosité interne presque intacte des particules est alors fermé aux réactifs et le catalyseur est prématurément désactivé.

Le phénomène qui vient d'être décrit est bien connu sous le nom de colmatage aux bouches des pores. Les preuves de son existence et l'analyse de ses causes ont été publiées à plusieurs reprises dans la littérature scientifique internationale, par exemple :

-    "Catalyst Deactivation through Pore Mouth Plugging" présenté au 5ème symposium international sur le génie de la réaction chimique à Houston, Texas, U.S.A. en mars 1978 , ou encore "Effects of Feed Metals on Catalyst Aging in Hydroprocessing Residuum" dans Industrial Engineering Chemistrv Process Design and Development volume 20, pages 262 à 273, publié en 1981 par l'American Chemical Society, ou encore dans "Effect of Catalyst Pore Structure on hydroTreating of Heavy Oil" présenté au congrès national de l'American Chemical Society à Las Vegas, U.S.A., les 3-4 mars 1982.

Un catalyseur d'hydrotraitement de coupes hydrocarbonées lourdes contenant des métaux doit donc être composé d'un support présentant un profil de porosité particulièrement adapté aux contraintes diffusionnelles spécifiques aux hydrotraitements et une texture adaptée à une bonne captation des impuretés métalliques, tout en évitant les problèmes de colmatage mentionnés ci-dessus.

Les catalyseurs usuellement employés sont composés d'un support à base d'alumine présentant une porosité particulière et d'une phase active à base de sulfures mixtes constitués à la fois d'un sulfure d'un métal du groupe VIB (de préférence le molybdène) ainsi que d'un sulfure d'un métal du groupe VIII (de préférence le Ni ou le Co). Les métaux sont déposés à l'état oxyde et sont sulfurés pour être actifs en hydrotraitement. Le rapport atomique entre l'élément du groupe VIII et l'élément du groupe VIB considéré comme optimal usuellement est compris entre 0,4 et 0,6 atome groupe VIII/atome groupe VIB. Récemment, il a été montré dans le document EP 1 364 707 A1 (FR 2 839 902) qu'indépendamment de la texture poreuse un rapport inférieur à 0,4 permet de limiter la désactivation des catalyseurs et ainsi d'allonger la durée de vie des catalyseurs.

Il est connu de l'homme du métier qu'il existe deux types de support à base d'alumine des catalyseurs d'hydroraffinage et/ou d'hydroconversion de charges hydrocarbonées lourdes contenant des métaux. Ces supports se distinguent par leur profil de répartition poreuse.

Le premier, de nature bimodale, se caractérise par la présence de deux familles de pores bien distinctes, l'une dans le domaine des mésopores, l'autre dans le domaine des macropores. Nous définissons les mésopores comme des pores de diamètre inférieur à 500 Å et les macropores comme des pores de diamètre supérieur à 500 Å, la porosité étant mesurée par la méthode d'intrusion du mercure. La fonction des mésopores est de développer une grande surface spécifique qui multiplie les chances de contact entre les molécules réactives et les sites catalytiques. Les macropores servent à irriguer l'ensemble des domaines mésoporeux (où se concentre la phase active) par les molécules réactives et à réaliser la réaction de déaggrégation des asphaltènes afin de réduire leur taille.

Ce type de support bimodal peut être préparé à partir d'un gel d'alumine de type boehmite ou pseudoboehmite ou encore par comalaxage d'une charge d'alumine y ou d'alumine calcinée avec un liant qui peut être un gel d'alumine de type boehmite ou pseudoboehmite (US 5,089,463 - Chevron) ou un composé organique tel que l'acétate de cellulose (EP 1 060 794 Al Japan Energy Corporation) ou encore par comalaxage d'un gel d'alumine de type boehmite ou pseudoboehmite avec des fines recyclées (US 5,827,421 - Texaco). L'introduction de la phase active à l'état oxyde peut être réalisée soit par imprégnation d'une solution des sels des éléments à déposer (US 5,827,421 - Texaco), soit lors de la préparation du support (US 4,880,525 - Shell). Ces catalyseurs se présentent le plus souvent sous forme d'extrudés, mais peuvent aussi se présenter sous forme de billes (US 6,656,349 B1 - Nippon Ketjen).

L'impact de la répartition poreuse des catalyseurs bimodaux a été largement étudié. D'après le brevet EP 1 060 794, la présence d'au moins 0,32 cm3/g de macropores (supérieur à 500 Å) ainsi que des mésopores de taille moyenne comprise entre 80 et 200 Å permet d'obtenir un catalyseur présentant à la fois une forte activité initiale et une forte capacité en rétention en métaux et ainsi une large durée de vie. La proportion de macropores est sujette à débat puisque selon le brevet US 5,397,456, il existe un compromis entre augmentation de la macroporosité pour faciliter la diffusion des grosses molécules et diminution de la macroporosité pour limiter l'empoisonnement de l'intérieur des grains. Selon ces auteurs, de 11 à 18 % du volume poreux présent dans des pores de taille supérieur à 250 Å serait une bonne proportion. Par ailleurs, selon le brevet US 5,827,421, un catalyseur présentant un large volume poreux (0,82 à 0,98 cm3/g) ainsi que la particularité d'avoir de grands mésopores (55 à 64,5 % du volume poreux entre 110-130Å +/-50 Å) et une large fraction de macropores (27 à 34 % du volume poreux au dessus de 250 Å) serait particulièrement performant lorsqu'il s'agit de maximiser la conversion de ces charges tout en limitant la formation de sédiments dans les produits de conversion et maximisant la désulfuration.

Ces catalyseurs à profil de porosité bimodale sont très actifs, mais présentent une moins bonne capacité de rétention que les catalyseurs à profil de porosité polymodale.

Le second profil de porosité des supports à base d'alumine des catalyseurs d'hydroraffinage et/ou d'hydroconversion des charges hydrocarbonées contenant des métaux est de nature polymodale. La courbe de distribution cumulée du volume poreux en fonction du diamètre de pores obtenue par la méthode d'intrusion du mercure n'est ni monomodale ni bimodale en ce sens qu'il n'apparaît plus de familles de pores distinctes dont les diamètres de pores seraient centrés sur des valeurs moyennes bien définies, mais une répartition relativement continue des pores entre deux valeurs extrêmes de diamètre. Entre ces valeurs extrêmes, il n'y a pas de palier horizontal sur la courbe de répartition poreuse. Cette répartition polymodale est liée à une structure poreuse en "bogue de châtaigne" ou en "oursins de mer" obtenue avec des agglomérés d'alumine préparés par déshydratation rapide de l'hydrargillite puis agglomération de la poudre d'alumine flash obtenue selon un brevet de la demanderesse (US 4,552,650 - IFP). Les agglomérés d'alumine ainsi préparés peuvent se présenter sous forme de billes ou sous forme d'extrudés comme le montrent les brevets FR 2,764,213 et US 6,043,187.

La structure "en bogue de châtaigne" ou "en oursins de mer", est constituée d'une pluralité d'agglomérats juxtaposés formés chacun d'une pluralité de plaquettes aciculaires, les plaquettes de chaque agglomérat étant orientées généralement radialement les unes vis-à-vis des autres et par rapport au centre de l'agglomérat. Au moins 50 % des plaquettes aciculaires ont une dimension suivant leur axe de plus grand développement comprise entre 0,05 et 5 micromètres et de préférence entre 0,1 et 2 micromètres, un rapport de cette dimension à leur largeur moyenne compris entre 2 et 20, et de préférence entre 5 et 15, un rapport de cette dimension à leur épaisseur moyenne compris entre 1 et 5000, et de préférence entre 10 et 200. Au moins 50 % des agglomérats de plaquettes aciculaires constituent une collection de particules pseudo-sphériques de taille moyenne comprise entre 1 et 20 micromètres, de préférence entre 2 et 10 micromètres. Des images très adéquates pour représenter une telle structure sont un tas de bogues épineuses de châtaigne, ou encore un tas d'oursins de mer, d'où la dénomination de structure poreuse en bogue de châtaigne ou

en oursins de mer qui est utilisée par l'homme du métier.

La majorité des pores est constituée par les espaces libres situés entre les plaquettes aciculaires rayonnantes. Ces pores de par leur nature "en coins" sont de diamètre continûment variable entre 100 et 1000 Å. Le réseau de macropores interconnectées résulte de l'espace laissé libre entre les agglomérats juxtaposés.

Ces catalyseurs à profil de porosité polymodale présentent une distribution poreuse (déterminée par la technique de porosimétrie au mercure) caractérisée de préférence comme suit :

- Volume poreux total compris entre 0,7 et 2 cm$^3$/g,
- % du volume poreux total en pores de diamètre moyen inférieur à 100 Å : entre 0 et 10,
- % du volume poreux total en pores de diamètre moyen compris entre 100 et 1000 Å : entre 40 et 90,
- % du volume poreux total en pores de diamètre moyen compris entre 1000 et 5000 Å : entre 5 et 60,
- % du volume poreux total en pores de diamètre moyen compris entre 5000 et 10000 Å : entre 5 et 50,
- % du volume poreux total en pores de diamètre moyen supérieur à 10000 Å : entre 5 et 20.

La surface spécifique mesurée par la méthode B.E.T. de ces catalyseurs est comprise entre 50 et 250 m$^2$/g.

La structure poreuse en "bogue de châtaigne" ou en "oursins de mer" associée aux caractéristiques de répartition poreuse décrite ci-dessus permet l'obtention de catalyseurs d'hydroraffinage et/ou d'hydroconversion à très forts pouvoirs de rétention, tout en maintenant une activité en hydrodémétallation élevée, performances que ne peuvent réaliser les catalyseurs bimodaux. Les raisons sont que la forme en "coin" des mésopores de la structure en "bogue de châtaigne" ou en "oursins de mer" compense ou supprime les gradients de concentration en réactifs qui s'établiraient normalement dans un pore cylindrique, phénomène s'ajoutant à une géométrie très favorable pour s'opposer au colmatage des bouches de pores. En outre, chaque mésopore ou presque a un accès indépendant des autres à la macroporosité interstitielle favorisant l'accumulation homogène des dépôts sans colmatage prématurément désactivant.

Ces catalyseurs présentent néanmoins l'inconvénient d'être moins actifs en activité initiale que les catalyseurs bimodaux sur les fonctions HDM (hydrodémétallation), HDAC$_7$ (hydroconversion des asphaltènes insolubles dans le n-heptane), HDCCR (hydroconversion des résidus carbonés quantifiés par l'analyse du Carbone Conradson). Ce critère d'activité initiale est aujourd'hui capitale tant pour l'hydroraffinage de résidus en lit fixe que pour l'hydroconversion des résidus en lit bouillonnant.

En effet dans les procédés d'hydroraffinage de résidus en lit fixe, bien que ces catalyseurs d'HDM possèdent un fort pouvoir de rétention, nécessaire pour traiter des charges hydrocarbonées à fortes teneurs en métaux (Ni+V supérieur à 40 ppm, par exemple), les moins bonnes performances initiales pour les fonctions HDAC$_7$, HDM, HDCCR de ce type de catalyseurs sont pénalisantes pour les performances des catalyseurs d'HDS en aval, qui sont de fait mal protégés des asphaltènes, du dépôt de métaux Ni+V et du coke.

Dans les procédés d'hydroconversion à lit bouillonnant traitant des charges hydrocarbonées à fortes teneurs en métaux (Ni+V supérieur à 250 ppm par exemple), les moins bonnes performances initiales de ce catalyseur à structure poreuse en "bogue de châtaigne" ou en "oursins de mer" rendent nécessaire une quantité de catalyseur frais d'appoint journalier plus importante.

Pour des charges hydrocarbonées contenant de fortes teneurs en métaux, la forme "bille" est préférée à la forme "extrudé" tant pour l'hydroraffinage en lit fixe que pour l'hydroconversion en lit bouillonnant.

Pour l'hydroraffinage en lit fixe, la forme bille du catalyseur d'HDM génère moins de delta P (perte de charge) initiale, permettant ainsi de prolonger la durée du cycle du catalyseur. La forme bille permet également un déchargement du catalyseur plus aisé en raison du plus faible colmatage intergranulaire. D'autre part, le "grading" de tailles de billes est facile à réaliser et permet de diminuer la delta P du lit fixe tout en maintenant une bonne rétention en métaux (Ni+V). Le catalyseur sous forme de bille est préféré dans le cadre d'une application d'HDM.

Pour l'hydroconversion en lit bouillonnant, la forme bille permet une fluidisation du lit plus homogène et présente des propriétés de résistance à l'abrasion améliorée par rapport à la forme "extrudé". Le mouvement des billes est plus homogène et l'homogénéité des solides dans le lit permet d'atteindre un bon niveau de rétention en métaux en évitant des phénomènes de ségrégation dus à la gravité. La taille de la bille est également ajustable en fonction de l'activité chimique désirée afin de minimiser les problèmes liés à la diffusion des molécules dans les pores du catalyseur. La captation en métaux est considérablement augmentée en lit bouillonnant par rapport au lit fixe.

Par ailleurs, FR-2.787.040 décrit un procédé d'hydrotraitement avec un catalyseur extrudé mis en oeuvre en lit bouillonnant, à structure "bogue de châtaigne" et dopé par du phosphore, du bore ou du silicium.

De manière surprenante, la demanderesse a découvert que l'ajout d'un élément dopant choisi dans le groupe formé par le phosphore, le bore, le silicium et les halogènes sur des catalyseurs polymodaux à texture type bogue de châtaigne de forme bille permettait d'augmenter l'activité initiale de ces catalyseurs, et donc de mieux protéger les catalyseurs situés en aval dans les procédés en lit fixe, mais également de diminuer la quantité de catalyseur frais d'appoint journalier dans les procédés en lit bouillonnant.

## DESCRIPTION DE L'INVENTION

L'invention concerne un catalyseur d'hydroraffinage (hydrotraitement) et/ou d'hydroconversion de charges hydrocarbonées lourdes contenant des métaux, présentant à la fois une forte activité initiale et un pouvoir de rétention exceptionnellement élevé.

Ledit catalyseur comprend un support poreux à base d'alumine se caractérisant par une structure poreuse "en bogue de châtaigne ou en oursins de mer" et se présentant sous forme de billes, au moins un métal catalytique ou un composé de métal catalytique du groupe VIB (colonne 6 de la nouvelle notation de la table périodique des éléments), de préférence le molybdène, et éventuellement au moins un métal catalytique ou un composé de métal catalytique du groupe VIII (colonnes 8, 9 et 10 de la nouvelle notation de la table périodique des éléments), de préférence le nickel. Le catalyseur renferme en outre du phosphore comme élément dopant.

Sans vouloir être lié par une quelconque théorie, il semble que les propriétés améliorées en activité initiale du catalyseur de la présente invention soient dues à une forte augmentation de la dispersion de la phase active initiale sur ce type de support par la présence d'au moins un élément dopant.

La quantité de métal du groupe VIB, exprimée en % poids d'oxyde par rapport au poids du catalyseur final, peut être comprise entre 1 et 20 %, de préférence entre 7 et 10 %.

La quantité de métal du groupe VIII non noble, exprimée en % poids d'oxyde par rapport au poids du catalyseur final, peut être comprise entre 0 et 10 %, de préférence entre 1,5 et 3 %.

La quantité de phosphore, exprimée en % poids d'oxyde par rapport au poids du catalyseur final, peut être comprise entre 0,3 et 10 %, de préférence entre 1 et 5 %, et de manière encore plus préférée entre 1,5 et 3 %.

Le rapport atomique entre l'élément phosphore et l'élément du groupe VIB est avantageusement choisi entre 0,3 et 0,6.

Préparation du support

Le support dont l'emploi est un élément essentiel de l'invention se présente sous forme de billes d'alumine de diamètre généralement compris entre 0,5 et 20 mm, de préférence entre 1 et 10 mm et de manière très préférée entre 1 et 6 mm. Ce support contient de 100 à 1000 parties par million en poids de silice. Il est obtenu de préférence par la méthode décrite dans US 4,552,650 :

> a) on traite les billes d'alumine active dans un milieu aqueux constitué d'un mélange d'au moins un acide permettant de dissoudre au moins une partie de l'alumine des billes et d'au moins un composé apportant un anion capable de se combiner avec les ions aluminium en solution, ce dernier composé étant un individu chimique distinct de l'acide précité,
>
> b) on soumet simultanément ou subséquemment les billes ainsi traitées à un traitement à une température comprise entre environ 80°C et environ 250°C pendant une période comprise entre environ quelques minutes et environ 36 heures.
>
> c) on sèche éventuellement les billes et on les soumet à une activation thermique à une température comprise entre environ 500°C et environ 1100°C.

Les billes d'alumine active mises en oeuvre selon la présente invention sont préparées par granulation à partir d'une poudre d'alumine active présentant une structure mal cristallisée et/ou amorphe, selon le procédé tel que décrit dans FR 1 438 497. Ce procédé consiste à humecter à l'aide d'une solution aqueuse l'alumine active présentant une structure mal cristallisée et/ou amorphe, à l'agglomérer au granulateur, à faire mûrir les billes obtenues en atmosphère humide à température peu élevée, de préférence comprise entre 60 et environ 100°C, à sécher puis à calciner ces billes à une température comprise entre environ 250°C et environ 900°C.

On entend par alumine de structure mal cristallisée, une alumine telle que l'analyse aux rayons X donne un diagramme ne présentant qu'une ou quelques raies diffuses correspondant aux phases cristallines des alumines de transition basse température et comportant essentiellement les phases khi, rho, êta, gamma, pseudogamma et leurs mélanges.

L'alumine active mise en oeuvre est généralement obtenue par déshydratation rapide des hydroxydes d'aluminium tels que la bayérite, l'hydrargillite ou gibbsite, la nordstrandite ou les oxyhydroxydes d'aluminium tels que la boehmite et le diaspore. Cette déshydratation peut être opérée dans n'importe quel appareillage approprié à l'aide d'un courant de gaz chaud. La température d'entrée des gaz dans l'appareillage varie généralement de 400°C à 1200°C environ et le temps de contact de l'hydroxyde ou de l'oxyhydroxyde avec les gaz chauds est généralement compris entre une fraction de seconde et 4 à 5 secondes.

La surface spécifique mesurée par la méthode BET de l'alumine active obtenue par déshydratation rapide d'hydroxydes ou d'oxyhydroxydes varie généralement entre environ 50 et 400 m2/g, le diamètre des particules est généralement compris entre 0,1 et 300 micromètres et de préférence entre 1 et 120 micromètres. La perte au feu mesurée par calcination à 1000°C varie généralement entre 3 et 15 %, ce qui correspond à un rapport molaire $H_2O/Al_2O_3$ compris entre environ 0,17 et 0,85.

Selon un mode de mise en oeuvre particulier, on utilise de préférence une alumine active provenant la déshydratation rapide de l'hydrate Bayer (hydrargillite) qui est l'hydroxyde d'aluminium industriel facilement accessible et très bon marché ; une telle alumine active est bien connue de l'homme de l'art, son procédé de préparation a notamment été décrit dans FR 1 108 011.

L'alumine active mise en oeuvre peut être utilisée telle quelle ou après avoir été traitée de façon à ce que sa teneur en soude exprimée en $Na_2O$ soit inférieure à 1000 ppm. L'alumine active mise en oeuvre peut avoir été broyée ou non.

D'une manière préférée, des agents porogènes sont ajoutés lors de la granulation. Les agents porogènes que l'on peut utiliser sont notamment la farine de bois, le charbon de bois, la cellulose, les amidons, la naphtaline et, d'une manière générale tous les composés organiques susceptibles d'être éliminés par calcination.

On opère ensuite, le cas échéant, le mûrissement, le séchage et/ou la calcination des billes.

Les billes d'alumine active mis en oeuvre selon le procédé de l'invention présentent généralement les caractéristiques suivantes : leur perte au feu mesurée par calcination à 1000°C est comprise entre environ 1 et environ 15 %, leur surface spécifique est comprise entre environ 100 et environ 350 m²/g, leur volume poreux total est compris entre environ 0,45 et environ 1,5 cm³/g.

Les billes d'alumine active sont traitées selon l'invention dans un milieu aqueux constitué d'un mélange d'au moins un acide permettant de dissoudre au moins une partie de l'alumine des billes et d'au moins un composé apportant un anion capable de se combiner avec les ions aluminium en solution.

On entend par acide permettant de dissoudre au moins une partie de l'alumine des billes tout acide qui, mis en contact avec les billes d'alumine active définies ci-dessus, réalise la mise en solution d'au moins une partie des ions aluminium. L'acide doit dissoudre au moins 0,5 % et au plus 15 % en poids de l'alumine des billes. Sa concentration dans le milieu aqueux de traitement doit être inférieure à 20 % en poids et de préférence comprise entre 1 % et 15 %.

On utilise de préférence les acides forts tels que l'acide nitrique, l'acide chlorhydrique, l'acide perchlorique, l'acide sulfurique ou des acides faibles mis en oeuvre à une concentration telle que leur solution aqueuse présente un pH inférieur à environ 4.

On entend par composé apportant un anion capable de se combiner avec les ions aluminium en solution, tout composé capable de libérer en solution un anion A(-n) susceptible de former avec les cations Al(3+) des produits dans lesquels le rapport atomique n(A/Al) est inférieur ou égal à 3.

Un cas particulier de ces composés peut être illustré par les sels basiques de formule générale Al2(OH)xAy dans laquelle 0 < x < 6 ; ny < 6 ; n représente le nombre de charges de l'anion A.

La concentration de ce composé dans le milieu aqueux de traitement doit être inférieure à 50 % en poids et de préférence comprise entre 3 % et 30 %.

On utilise de préférence les composés capables de libérer en solution les anions choisis parmi le groupe constitué par les anions nitrate, chlorure, sulfate, perchlorate, chloroacétate, dichloracétate, trichloracétate, bromoacétate, dibromacétate, et les anions de formule générale RCOO(-), dans laquelle R représente un radical pris dans le groupe comprenant H, $CH_3$-, $C_2H_5$-, $CH_3CH_2$- $(CH_3)_2CH$-.

Les composés capables de libérer en solution l'anion A(-n) peuvent opérer cette libération, soit directement par exemple par dissociation, soit indirectement par exemple par hydrolyse. Les composés peuvent notamment être choisis parmi le groupe comportant: les acides minéraux ou organiques, les anhydrides, les sels organiques ou minéraux, les esters. Parmi les sels minéraux on peut citer les sels alcalins ou alcalino-terreux solubles en milieu aqueux, comme ceux de sodium, de potassium, de magnésium ou de calcium, les sels d'ammonium, les sels d'aluminium, les sels de terres rares.

Ce premier traitement peut être effectué soit par imprégnation à sec des billes, soit par immersion des billes dans la solution aqueuse constituée du mélange selon l'invention. Par imprégnation à sec on entend mise en contact des billes d'alumine avec un volume de solution inférieur ou égal au volume poreux total des billes traitées.

Selon un mode particulièrement préféré de mise en oeuvre, on utilise comme milieu aqueux des mélanges d'acide nitrique et acétique ou d'acide nitrique et formique.

On soumet simultanément ou subséquemment les billes ainsi traitées à un traitement à une température comprise entre environ 80 et environ 250 degrés, pendant une période de temps comprise entre environ 5 minutes et environ 36 heures.

Ce traitement hydrothermal n'entraîne aucune perte d'alumine.

On opère de préférence à une température comprise entre 120 et 220°C pendant une période de temps comprise entre 15 minutes et 18 heures.

Ce traitement constitue un traitement hydrothermal des billes d'alumine active qui réalise la transformation d'au moins une partie de celle-ci en boehmite. Ce traitement hydrothermal peut être réalisé soit sous pression de vapeur saturante, soit sous une pression partielle de vapeur d'eau au moins égale à 70 % de la pression de vapeur saturante correspondant à la température de traitement.

L'association d'un acide qui permet la dissolution d'au moins une partie de l'alumine et d'un anion qui permet la formation des produits décrits ci-dessus lors du traitement hydrothermal entraîne l'obtention d'une boehmite particulière, précurseur des plaquettes aciculaires du support de l'invention, dont la croissance procède radialement à partir de germes de cristallisation.

De plus, la concentration de l'acide et du composé dans le mélange de traitement et les conditions de traitement hydrothermal mises en oeuvre sont telles qu'il n'y a pas de perte d'alumine. L'augmentation de la porosité à la suite du traitement est donc due à une expansion des billes au cours du traitement et non à une perte d'alumine.

Les billes ainsi traitées sont ensuite éventuellement séchées à une température généralement comprise entre environ 100 et 200°C pendant une période de temps suffisante pour enlever l'eau qui n'est pas chimiquement liée. Les billes sont ensuite soumises à une activation thermique à une température comprise entre environ 500°C et environ 1100°C pendant une période comprise entre environ 15 minutes et 24 heures.

Les opérations d'activation peuvent se faire en plusieurs étapes. On opèrera de préférence une activation à une température comprise entre environ 550°C et 950°C.

Les billes d'alumine active résultantes présentent de manière préférée les caractéristiques suivantes :

- une surface spécifique comprise entre 80 et 250 m$^2$/g,
- une densité de remplissage tassé comprise entre environ 0,25 et 0,65 gr/cm3,
- un volume poreux total ( VPT ) compris entre 0,5 et environ 2,0 cm3/gr.
- une distribution poreuse, déterminée par la technique de porosimétrie au Hg, caractérisée de préférence comme suit :

    - % du volume poreux total en pores de diamètre moyen inférieur à 100Å : entre 0 et 10
    - % du volume poreux total en pores de diamètre moyen compris entre 100 et 1000Å : entre 40 et 90
    - % du volume poreux total en pores de diamètre moyen compris entre 1000 et 5000Å : entre 5 et 60
    - % du volume poreux total en pores de diamètre moyen compris entre 5000 et 10000Å : entre 5 et 50
    - % du volume poreux total en pores de diamètre moyen supérieur à 10000 Å : entre 5 et 20.

Le procédé précité de préparation de bille d'alumine permet notamment de modifier la répartition des volumes poreux suivant la taille des pores des billes non traitées. Il permet notamment d'augmenter la proportion des pores compris entre 100 et 1000 Å, de réduire la proportion des pores inférieurs à 100 Å et de diminuer la proportion des pores supérieurs à 5000 Å en modifiant peu la proportion des pores compris entre 1000 et 5000 Å.

Les billes d'alumine ainsi obtenues peuvent avoir été thermiquement stabilisées par les terres rares, la silice ou les métaux alcalino-terreux ainsi qu'il est bien connu de l'homme de l'art. En particulier, elles peuvent être stabilisés selon le procédé décrit dans le brevet US 4,061,594.

Dépôt de la phase active et du ou des éléments dopants

Le dépôt de la phase active à l'état oxyde et du ou des éléments dopants sur les billes d'alumine s'effectue de préférence par la méthode d'imprégnation dite "à sec" bien connue de l'homme du métier. L'imprégnation est effectuée de manière très préférée en une seule étape par une solution contenant l'ensemble des éléments constitutifs du catalyseur final (co-imprégnation). D'autres séquences d'imprégnation peuvent être mises en oeuvre pour obtenir le catalyseur de la présente invention.

Il est également possible d'introduire une partie des métaux, et une partie du ou des éléments dopants, voire la totalité, au cours de la préparation du support, notamment durant l'étape de granulation.

Les sources des éléments du groupe VIB qui peuvent être utilisées sont bien connues de l'homme du métier. Par exemple, parmi les sources de molybdène et de tungstène, on peut avantageusement utiliser les oxydes, les hydroxydes, les acides molybdiques et tungstiques et leurs sels en particulier les sels d'ammonium tels que le molybdate d'ammonium, l'heptamolybdate d'ammonium, le tungstate d'ammonium, les acides phosphomolybdique et phosphotungstique et leurs sels, les acétylacétonates, les xanthates, les fluorures, les chlorures, les bromures, les iodures, les oxyfluorures, les oxychlorures, les oxybromures, les oxyiodures, les complexes carbonyles, les thiomolybdates, les carboxylates. On utilise de préférence les oxydes et les sels d'ammonium tels que le molybdate d'ammonium, l'heptamolybdate d'ammonium et le tungstate d'ammonium.

Les sources des éléments du groupe VIII pouvant être utilisées sont connues et sont par exemple les nitrates, les sulfates, les phosphates, les halogénures, les carboxylates comme les acétates et les carbonates, les hydroxydes et les oxydes.

La source de phosphore préférée est l'acide orthophosphorique, mais ses sels et esters comme les phosphates alcalins, phosphates d'ammonium, les phosphates de gallium ou les phosphates d'alkyles conviennent également. Les acides phosphoreux, par exemple l'acide hypophosphoreux, l'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniaque , les amines primaires et secondaires, les amines cycliques, les composés de la famille de la pyridine et des quinoléines et les composés de la famille du pyrrole.

De manière avantageuse, après imprégnation du support, le procédé de préparation du catalyseur de la présente invention comprend les étapes suivantes

- on laisse reposer le solide humide sous une atmosphère humide à une température comprise entre 10 et 80°C,
- on sèche le solide humide obtenu à une température comprise entre 60 et 150°C,
- on calcine le solide obtenu après séchage à une température comprise entre 150 et 800°C.

La calcination n'est pas nécessaire dans le cas où les solutions d'imprégnation sont exemptes de composés contenant l'élément azote.

**Caractéristiques du catalyseur**

Le catalyseur selon la présente invention comprend un support sous forme de billes à base d'alumine, au moins un métal catalytique ou un composé de métal catalytique du groupe VIB (colonne 6 de la nouvelle notation de la table périodique des éléments), éventuellement au moins un métal catalytique ou un composé de métal catalytique du groupe VIII (colonnes 8, 9 et 10 de la nouvelle notation de la table périodique des éléments), la structure poreuse dudit catalyseur se composant d'une pluralité d'agglomérats juxtaposés, formés chacun d'une pluralité de plaquettes aciculaires, les plaquettes de chaque agglomérat étant orientées généralement radialement les unes vis-à-vis des autres et par rapport au centre de l'agglomérat.

Le catalyseur renferme en outre du phosphore comme élément dopant.

De préférence, l'élément du groupe VIB est le molybdène.

De préférence, lorsqu'il est présent, l'élément du groupe VIII est le nickel.

La quantité de métal du groupe VIB, exprimée en % poids d'oxyde par rapport au poids du catalyseur final, peut être comprise entre 1 et 20 %, de préférence entre 1 et 10 % et de manière très préférée entre 7 et 10 %.

La quantité de métal du groupe VIII non noble, exprimée en % poids d'oxyde par rapport au poids du catalyseur final, peut être comprise entre 0 et 10 %, de préférence entre 1,5 et 3 %.

La quantité de phosphore, exprimée en % poids d'oxyde par rapport au poids du catalyseur final, est avantageusement comprise entre 0,3 et 10 %, de préférence entre 1 et 5 %, et de manière encore plus préférée entre 1,5 et 3 %.

Dans ce cas, le catalyseur peut contenir en outre au moins un autre élément dopant choisi dans le groupe formé par le bore, le silicium et les halogènes.

Lorsqu'au moins un élément dopant est le bore, la quantité de bore, exprimée en % poids d'oxyde par rapport au poids du catalyseur final, est inférieure à 6 %, de manière préférée inférieure à 2 %.

Le rapport atomique entre l'élément phosphore et l'élément du groupe VIB est avantageusement choisi entre 0,3 et 0,6.

Lorsqu'au moins un élément dopant est le silicium, la teneur en silicium est comprise entre 0.1 et 10 % poids d'oxyde par rapport au poids de catalyseur final.

Lorsqu'au moins un élément dopant est un élément halogéné, la teneur en halogène est inférieure à 5 % poids par rapport au poids de catalyseur final.

De manière préférée, le catalyseur contient au moins un élément du groupe VIB à une teneur comprise entre 1 et 10 % poids d'oxyde par rapport au poids du catalyseur final, éventuellement au moins un élément du groupe VIII et du phosphore.

La distribution poreuse du catalyseur, déterminée par la technique de porosité au mercure, est la suivante:

- % du volume poreux total en pores de diamètre moyen inférieur à 100 Å : entre 0 et 10
- % du volume poreux total en pores de diamètre moyen compris entre 100 et 1000 Å : entre 40 et 90
- % du volume poreux total en pores de diamètre moyen compris entre 1000 et 5000 Å : entre 5 et 60
- % du volume poreux total en pores de diamètre moyen compris entre 5000 et 10000 Å : entre 5 et 50
- % du volume poreux total en pores de diamètre moyen supérieur à 10000 Å : entre 5 et 20.

Le volume poreux total des catalyseurs selon l'invention déterminé par porosité au mercure est compris entre 0,4 et 1,8 g/cm3.

La densité de remplissage tassé des catalyseurs selon l'invention est comprise entre 0,35 et 0,80 g/cm3.

De manière préférée, dans les catalyseurs selon la présente invention, le diamètre des pores à VHg/2 est compris entre 300 et 700 Å, c'est à dire que le diamètre moyen des pores, dont le volume sur la représentation graphique de la répartition poreuse correspond à la moitié du volume poreux total, est compris entre 300 et 700 Å, soit 30 à 70 nm.

Le catalyseur selon l'invention se présente sous forme de billes d'alumine de diamètre généralement compris entre 0,5 et 20 mm, de préférence entre 1 et 10 mm et de manière très préférée entre 1 et 6 mm.

Les catalyseurs selon l'invention présentent une surface spécifique mesurée par la méthode B.E.T. comprise entre 50 et 250 m2/g.

Les billes de catalyseurs présentent en général un écrasement grain à grain (EGG) d'au moins 1 daN/mm et une résistance à l'écrasement (ESH) d'au moins 1MPa. Par ailleurs le pourcentage de perte par attrition selon la norme ASTM D4050 desdites billes est généralement inférieur à 2 % du poids du support.

La méthode de mesure de l'écrasement grain à grain (EGG) consiste à mesurer la forme de compression maximale que peut supporter un grain avant sa rupture, lorsque le produit est placé entre deux plans se déplaçant à la vitesse constante de 5 cm/min.

La compression est appliquée perpendiculairement à l'une des génératrices du grain, et l'écrasement grain à grain est exprimé comme le rapport de la force à la longueur de la génératrice du grain.

La méthode de mesure de la résistance à l'écrasement (ESH) consiste à soumettre une certaine quantité de grains à une pression croissante au dessus d'un tamis et à récupérer les fines issues de l'écrasement des grains. La résistance à l'écrasement correspond à la force exercée pour obtenir un taux de fines représentant 0,5 % du poids des grains soumis au test. La méthode de mesure de la résistance à l'attrition selon la norme ASTM D4050 consiste à mettre en rotation un échantillon de catalyseur dans un cylindre. Les pertes par attrition sont alors calculées par la formule suivante :

% perte par attrition = 100 (1 - poids de catalyseur supérieur à 0,6 mm après test/poids de catalyseur supérieur à 0,6 mm chargé dans le cylindre).

Avantageusement, le procédé de préparation des catalyseurs selon la présente invention comprend au moins les étapes suivantes :

a) on traite des billes d'alumine active dans un milieu aqueux constitué d'un mélange d'au moins un acide permettant de dissoudre au moins une partie de l'alumine des billes et d'au moins un composé apportant un anion capable de se combiner avec les ions aluminium en solution, ce dernier composé étant un individu chimique distinct de l'acide précité,

b) on soumet simultanément ou subséquemment les billes ainsi traitées à un traitement à une température comprise entre 80°C et 250°C pendant une période comprise entre quelques minutes et 36 heures.

c) on sèche éventuellement les billes et on les soumet à une activation thermique à une température comprise entre 500°C et 1100°C.

d) on introduit sur le support au moins un élément dopant choisi dans le groupe formé par le bore, le phosphore, le silicium et les éléments du groupe VIIA (halogènes), au moins un élément du groupe VIB et éventuellement au moins un élément du groupe VIII.

Le dépôt de la phase active à l'état oxyde et du ou des éléments dopants sur les billes d'alumine à l'étape d) s'effectue de préférence par imprégnation, notamment par la méthode d'imprégnation dite "à sec" bien connue de l'homme du métier.

De manière avantageuse, après imprégnation du support, le procédé de préparation du catalyseur de la présente invention comprend les étapes suivantes

- on laisse reposer le solide humide sous une atmosphère humide à une température comprise entre 10 et 80°C,
- on sèche le solide humide obtenu à une température comprise entre 60 et 150°C,
- on calcine éventuellement le solide obtenu après séchage à une température comprise entre 150 et 800°C.

La calcination n'est pas nécessaire dans le cas où les solutions d'imprégnation sont exemptes de composés contenant l'élément azote.

Les catalyseurs selon l'invention sont ensuite de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Les catalyseurs préparés selon ce procédé de préparation sont compris dans l'invention.

Utilisation du catalyseur selon l'invention pour la conversion de charges hydrocarbonées

Les catalyseurs selon l'invention peuvent être mis en oeuvre dans tout type de procédé permettant de convertir des charges hydrocarbonées, contenant des métaux.

Les charges peuvent être par exemple des résidus atmosphériques ou des résidus sous vide issus de distillation directe, des huiles désasphaltées, des résidus issus de procédés de conversion tels que par exemple ceux provenant du coking, d'une hydroconversion en lit fixe, en lit bouillonnant ou encore en lit mobile. Ces charges peuvent être utilisées telles quelles ou encore diluées par une fraction hydrocarbonée ou un mélange de fractions hydrocarbonées pouvant être choisies par exemple dans les produits issu du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommée selon la terminologie anglo-saxonne VGO (Vacuum Gas Oil). Les charges lourdes peuvent ainsi comprendre des coupes issues du procédé de liquéfaction du charbon, des extraits aromatiques, ou toutes autres coupes hydrocarbonées.

Les charges lourdes présentent généralement des points d'ébullition initiaux supérieurs à 300°C, plus de 1 % poids de molécules ayant un point d'ébullition supérieur à 500°C, une teneur en métaux Ni+V supérieure à 1 ppm poids, de préférence supérieure à 20 ppm poids, une teneur en asphaltènes, précipité dans l'heptane, supérieure à 0.05 %, de préférence supérieure à 1 % poids.

Dans un mode de réalisation, une partie des effluents convertis peut être recyclée en amont de l'unité opérant le procédé d'hydroconversion et/ou hydrotraitement.

Les charges lourdes peuvent être mélangées avec du charbon sous forme de poudre, ce mélange est généralement appelé slurry. Ces charges peuvent être des sous produits issus de la conversion du charbon et re-mélangées à du charbon frais. La teneur en charbon dans la charge lourde est généralement et de préférence un ratio 1/4 (oil/coal) et peut varier largement entre 0.1 et 1. Le charbon peut contenir de la lignite, être un charbon subbitumineux (selon la terminologie anglo-saxonne), ou encore bitumineux. Tout type de charbon convient pour l'utilisation de l'invention, à la fois dans un premier réacteur ou dans tous les réacteurs fonctionnant en lit bouillonnant.

Modes de réalisation

Ce catalyseur peut être mis en oeuvre notamment dans des procédés d'hydrotraitement et/ou d'hydroconversion.

Le catalyseur selon l'invention peut être mis en oeuvre dans un procédé en lit fixe, dont l'objectif essentiel est d'éliminer les métaux, le soufre et d'abaisser le point d'ébullition moyen de ces hydrocarbures. Dans un procédé en lit fixe, le catalyseur est généralement mis en oeuvre à une température comprise entre 320 et 450°C, de préférence 350 à 410°C, sous une pression partielle d'hydrogène d'environ 3 MPa à environ 30 MPa, de préférence 10 à 20 MPa, à une vitesse spatiale d'environ 0.05 à 5 volumes de charge par volume de catalyseur et par heure, de préférence 0,2 à 0,5 volume de charge par volume de catalyseur et par heure, et avec un rapport hydrogène gazeux sur charge liquide d'hydrocarbures compris entre 200 et 5000 normaux mètres cubes par mètre cube, de préférence 500 à 1500 normaux mètres cubes par mètre cube.

Le catalyseur de la présente invention peut également être mis en oeuvre dans un procédé en lit bouillonnant sur les mêmes charges. Dans un tel procédé, le catalyseur est généralement mis en oeuvre à une température comprise entre 320 et 470°C, de préférence 400 à 450°C, sous une pression partielle d'hydrogène d'environ 3 MPa à environ 30 MPa, de préférence 10 à 20 MPa, à une vitesse spatiale d'environ 0,1 à 10 volumes de charge par volume de catalyseur et par heure, de préférence 0,5 à 2 volumes de charge par volume de catalyseur et par heure, et avec un rapport hydrogène gazeux sur charge liquide d'hydrocarbures compris entre 100 et 3000 normaux mètres cubes par mètre cube, de préférence 200 à 1200 normaux mètres cubes par mètre cube.

Un cas particulier d'application du catalyseur selon l'invention est l'utilisation du catalyseur en présence de charbon mélangé à la charge lourde à convertir. Comme décrit dans les brevets US 4,874,506 et US 4,437,973, le charbon sous forme de poudre est mélangé à une charge hydrocarbonée plus riche en hydrogène pour être converti en présence d'hydrogène et d'un catalyseur supporté. Cette opération est généralement réalisée pour l'hydroconversion des résidus, dans un ou plusieurs réacteurs en série fonctionnant en lit bouillonnant. L'utilisation du catalyseur selon l'invention sous forme de billes permettrait d'améliorer le comportement hydrodynamique du système ainsi que la facilité du sous-tirage en continu du catalyseur. A titre d'exemple, la conversion du charbon en liquide est assurée par le premier réacteur et ensuite l'HDM et la captation des impuretés est réalisée en même temps et ensuite une étape de finition peut être réalisée en utilisant d'autres catalyseurs

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Les exemples suivants illustrent l'invention décrite dans ce brevet sans toutefois en limiter la portée.

**Exemple 1: Préparation du support alumine rentrant dans la composition des catalyseurs.**

La matière première est de l'alumine obtenue par décomposition très rapide de l'hydrargillite dans un courant d'air chaud (T = 1000°C). Le produit obtenu est constitué d'un mélange d'alumines de transition : alumines (khi) et (rho). La surface spécifique de ce produit est de 300 m$^2$/g et la perte au feu (PAF) de 5 %.

L'alumine est broyée avec un broyeur à boulets, pour obtenir une poudre dont le diamètre moyen des particules est de 7 micromètres.

Cette alumine est mélangée avec de la farine de bois comme porogène (15 % en bois), puis mise en forme dans un granulateur ou drageoir. Pour permettre cette mise en forme, on ajoute de l'eau.

Les billes obtenues sont séchées et calcinées, puis sont soumises à une étape de maturation par passage de vapeur d'eau à 100°C pendant 24 heures.

Ces billes sont immergées dans une solution d'acide acétique à 50 g/l pendant environ 5 heures.

Elles sont alors retirées de la solution, égouttées puis introduites dans un autoclave pendant 2 heures environ, à une température de 210°C sous une pression de 20,5 bars.

En sortie d'autoclave, les billes sont séchées pendant 4 heures à 100°C et calcinées pendant 2 heures à 650°C.

Les billes de granulométrie comprise entre 1,4 et 2,8 mm sont sélectionnées.

**Exemple 2: Préparation du catalyseur A supporté sur le support de l'exemple 1**

Nous avons imprégné à sec le support de l'exemple 1 par une solution aqueuse renfermant des sels de molybdène et de nickel. Le sel de molybdène est l'heptamolybdate d'ammonium $(NH_4)_6Mo_7O_{24}.4H_2O$ et celui de nickel le nitrate de nickel $Ni(NO_3)_2.6H_2O$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 11 % poids du catalyseur fini. La teneur finale en oxyde de nickel NiO est de 2,4 % poids du catalyseur fini.

Les caractéristiques texturales et physico-chimiques du catalyseur A sont reportées dans le tableau 1.

Tableau 1

| Catalyseur | A | B |
|---|---|---|
| MoO$_3$ (% pds) | 11,0 | 9,4 |
| NiO (% pds) | 2,4 | 2,0 |
| P$_2$O$_5$ (% pds) | - | 2,0 |
| SiO$_2$ (% pds) | - | - |
| Ni/Mo (at/at) | 0,42 | 0,40 |
| P/Mo (at/at) | - | 0,42 |
| dMo (at/nm$^2$) | 3,9 | 3,8 |
| DRT (g/cm3) | 0,505 | 0,517 |
| S$_{BET}$ (m$^2$/g) | 119 | 105 |
| Vpt Hg (cm$^3$/g) | 0,96 | 0,94 |

(suite)

| Catalyseur | A | B |
|---|---|---|
| dp à VHg/2 (Å) | 400 | 420 |
| V Hg > 500 Å (cm$^3$/g) | 0,45 | 0,44 |
| V Hg > 1000 Å (cm$^3$/g) | 0,32 | 0,30 |

### Exemple 3 : Préparation du catalyseur B supporté sur le support de l'exemple 1.

Nous avons imprégné à sec le support de l'exemple 1 par une solution aqueuse renfermant des sels de molybdène et de nickel et de l'acide phosphorique. Le précurseur de molybdène est l'oxyde de molybdène $MoO_3$ et celui de nickel est le carbonate de nickel $Ni(CO_3)$. Après maturation à température ambiante dans une atmosphère saturée en eau, les extrudés imprégnés sont séchés pendant une nuit à 120°C puis calcinés à 500°C pendant 2 heures sous air sec. La teneur finale en trioxyde de molybdène est de 9,4 % poids du catalyseur fini. La teneur finale en oxyde de nickel NiO est de 2 % poids du catalyseur fini. La teneur finale en oxyde de phosphore $P_2O_5$ est de 2 % poids du catalyseur fini.

Les caractéristiques texturales et physico-chimiques du catalyseur B sont reportées dans le tableau 1.

### Exemple 4 : Comparaison des performances en hydrotraitement de résidu en lit fixe.

Les catalyseurs A, B précédemment décrits ont été comparés en test d'hydrotraitement de différents résidus pétroliers. Il s'agit en premier lieu d'un résidu atmosphérique (RA) d'origine Moyen Orient (Arabian Light) et d'autre part d'un résidu atmosphérique de brut extra lourd vénézuélien (Boscan). Ces deux résidus sont caractérisés par des viscosités élevées, des fortes teneurs en carbone Conradson et asphaltènes. Le RA Boscan contient de plus des teneurs très élevées en nickel et vanadium.

Les caractéristiques de ces résidus sont reportées dans le tableau 2 :

Tableau 2

| | | RA Arabian Light | RA Boscan |
|---|---|---|---|
| Densité 15/4 | | 0,959 | 1,023 |
| Viscosité à 100°C | mm$^2$/s | 25,6 | 1380 |
| Viscosité à 150°C | mm$^2$/s | 7,66 | 120 |
| Soufre | % pds | 3,34 | 5,5 |
| Azote | ppm | 2075 | 5800 |
| Nickel | ppm | 9 | 125 |
| Vanadium | ppm | 35 | 1290 |
| Fer | ppm | 1 | 8 |
| Carbone | % pds | 84,7 | 83,40 |
| Hydrogène | % pds | 11,2 | 10,02 |
| Carbone aromatique | % | 26 | 29,0 |
| Masse moléculaire | g/mol | 460 | 730 |
| Carbone Conradson | % pds | 9,5 | 16,9 |
| Asphaltènes C5 | % pds | 5,6 | 24,1 |
| Asphaltènes C7 | % pds | 3,1 | 14,9 |
| SARA | % pds | | |
| Saturés | % pds | 30,7 | 8,7 |
| Aromatiques | % pds | 47,5 | 35,0 |
| Résines | % pds | 17,6 | 34,0 |
| Asphaltènes | % pds | 3,0 | 14,6 |
| Distillation simulée | | | |
| PI | °C | 229 | 224 |
| 5 % | °C | 325 | 335 |
| 10 % | °C | 358 | 402 |

(suite)

|  |  | RA Arabian Light | RA Boscan |
|---|---|---|---|
| 20 % | °C | 404 | 474 |
| 30 % | °C | 436 | 523 |
| 40 % | °C | 468 | 566 |
| 50 % | °C | 503 |  |
| 60 % | °C | 543 |  |
| 70 % | °C | 590 |  |
| 80 % | °C | 642 |  |

Les tests ont été menés dans une unité pilote d'hydrotraitement comportant un réacteur tubulaire en lit fixe. Le réacteur est rempli avec 1 litre de catalyseur. L'écoulement des fluides (résidu + hydrogène) est ascendant dans le réacteur. Ce type d'unité pilote est représentatif du fonctionnement de l'un des réacteurs de l'unité HYVAHL de l'IFP d'hydroconversion de résidus en lits fixes.

Après une étape de sulfuration par circulation dans le réacteur d'une coupe gazole additionnée de diméthyl disulfure à une température finale de 350°C, on opère l'unité pendant 300 heures avec le Résidu Atmosphérique Arabian Light à 370°C, 150 bars de pression totale utilisant une VVH de 0,5 l charge/l cata/h. Le débit d'hydrogène est tel qu'il respecte le rapport 1000 l/l de charge. Les conditions de l'essai sur RA AL sont fixées en isotherme, ce qui permet de mesurer la désactivation initiale du catalyseur par la comparaison directe des performances à différents âges. Les âges sont exprimés en heures de fonctionnement sous résidu atmosphérique Arabian Light, le temps zéro étant pris dès l'arrivée à la température du test (370°C).

Les performances HDM, HDAsC7 et HDCCR sont définies de la façon suivante :

HDM (% pds) =

$$((\text{ppm pds Ni+V})_{charge} - (\text{ppm pds Ni+V})_{recette})/((\text{ppm pds Ni+V})_{charge}) * 100$$

HDAsC7 (% pds) =

$$((\% \text{ pds asphaltènes insolubles dans le n-heptane})_{charge} - (\% \text{ pds asphaltènes insolubles dans le n-heptane})_{recette})/((\% \text{ pds asphaltènes insolubles dans le n-heptane})_{charge}) * 100$$

HDCCR (% pds) =

$$((\% \text{ pds CCR})_{charge} - (\% \text{ pds CCR})_{recette})/((\% \text{ pds CCR})_{charge}) * 100$$

Le tableau 3 compare les performances HDM, HDAsC7 et HDCCR des catalyseurs A, B et C en début de test (50 heures) ainsi qu'en fin de test (300 heures).

Tableau 3

| Catalyseur + Age | HDM (% pds) | HDAsC7 (%pds) | HDCCR (% pds) |
|---|---|---|---|
| A à 50 heures | 77 | 79 | 38 |
| B à 50 heures | 87 | 90 | 42 |
| C à 50 heures | 85 | 88 | 40 |
| A à 300 heures | 73 | 68 | 30 |
| B à 300 heures | 83 | 80 | 40 |
| C à 300 heures | 81 | 78 | 38 |

On procède ensuite au changement de charge par passage sur résidu atmosphérique Boscan. La conduite du test vise à maintenir un taux d'HDM constant autour de 80 % poids tout au long du cycle. Pour cela, on compense la désactivation du catalyseur par une augmentation progressive de la température réactionnelle. On arrête le test lorsque la température réactionnelle atteint 420°C, température considérée comme représentative de la température de fin de cycle d'une unité industrielle d'hydroraffinage de résidus.

Le tableau 4 compare les quantités de nickel+vanadium en provenance du RA de Boscan déposés sur les 2 catalyseurs.

Tableau 4

| Catalyseur | Ni+V déposés (% de la masse de catalyseur frais) |
|---|---|
| Catalyseur A | 70 |
| Catalyseur B | 85 |

Il apparaît donc que le catalyseur d'HDM dopé au phosphore (catalyseur B) et présentant une plus faible teneur en molybdène conduisent à des performance initiales sur RAAL (HDM, HDAsC7, HDCCR) supérieures à celles du catalyseur non dopé et présentant une plus forte teneur en phase active (catalyseur A).

La présence du dopant phosphore permet également d'améliorer significativement le pouvoir de rétention de ce type de catalyseur tout en maintenant une HDM élevée (égale à 80 %). On remarque également que le dopant phosphore permet des gains en activité initiale sur RAAL et en rétention sur RA Boscan plus importants que le dopant silicium.

**Exemple 5 : Comparaison des performances en hydroconversion de résidu en lit bouillonnant.**

Les performances des catalyseurs A, B ont été comparées au cours d'un test pilote dans une unité pilote comportant un réacteur tubulaire équipé d'un dispositif permettant le maintien en ébullition permanent du catalyseur à l'intérieur du réacteur. L'unité pilote mise en oeuvre est représentative d'une unité industrielle H-OIL d'hydroconversion de résidus en lits bouillonnants décrite dans de nombreux brevets, par exemple US 4,521,295, US 4,495,060.

On charge le réacteur du pilote avec 1 litre de catalyseur sous forme de bille élaborée selon l'invention et telle que décrit précédemment.

La mise en huile de l'unité est réalisée en utilisant un Gasoil issu de distillation sous vide, ou DSV, dont les caractéristiques sont reportées dans le tableau 5.

Tableau 5

| Charge | DSV | RSV SAFANIYA | **RA BOSCAN** |
|---|---|---|---|
| Spec. grav. | 0,9414 | 1,0457 | **1,023** |
| Soufre (% poids) | 2,92 | 5,31 | **5,5** |
| Azote (ppm pds) | 1357 | 4600 | **5800** |
| Viscosité (cSt) | 13,77 | 5110 | **1380** |
| Temp. viscosité (°C) | 100 | 100 | **100** |
| Viscosité (cSt) | 38,64 | 285 | **120** |
| Temp. viscosité (°C) | 70 | 150 | **150** |
| C. Conradson (% poids) | | 23,95 | **16.9** |
| Asphalt. C7 (% poids) | | 14,5 | **14.0** |
| Ni (ppm pds) | <2 | 52 | **125** |
| V (ppm pds) | 3,3 | 166 | **1290** |
| D1160 : PI°C | 361 | 496 | **224** |
| D1160 : 05 % vol.°C | 416 | 536 | **335** |
| D1160 : 10 % vol.°C | 431 | 558 | **402** |
| D1160 : 20 % vol.°C | 452 | | **474** |

(suite)

| Charge | DSV | RSV SAFANIYA | **RA BOSCAN** |
|---|---|---|---|
| D1160 : 30 % vol.°C | 467 | | **523** |
| D1160 : 40 % vol.°C | 479 | | **566** |
| D1160 : 50 % vol.°C | 493 | | |
| D1160 : 60 % vol.°C | 507 | | |
| D1160 : 70 % vol.°C | 522 | | |
| D1160 : 80 % vol.°C | 542 | | |
| D1160 : 90 % vol.°C | 568 | | |
| D1160 : 95 % vol. °C | 589 | | |
| D1160 : PF°C | 598 | 558 | **566** |

La température est augmentée jusqu'à 343°C puis la charge de test, un résidu de distillation sous vide de type Safaniya (RSV), est injectée. La température de réaction est ensuite élevée à 410°C. Le débit d'hydrogène est de 600 L/L, la vitesse spatiale est de 0,3 l/l/hr.

Les conditions de l'essai sont fixées en isotherme, ce qui permet de mesurer la désactivation du catalyseur par la comparaison directe des performances à différents âges. Les âges sont exprimés ici en barils de charge / livre de catalyseur (bbl/lb) ce qui représente la quantité cumulée de charge passée sur le catalyseur rapportée au poids de catalyseur chargé.

Les performances en conversion, HDM sont définies de la façon suivante :

$$\text{Conversion (\%pds)} =$$

$$((\% \text{ pds de } 550°C+)_{charge} - (\% \text{ pds } 550°C+)_{recette})/((\% \text{ pds } 550°C+)_{charge}) * 100$$

$$\text{HDM (\% pds)} =$$

$$((\text{ppm pds Ni+V})_{charge} - (\text{ppm pds Ni+V})_{recette})/((\text{ppm pds Ni+V})_{charge}) * 100$$

On procède ensuite au changement de charge par passage sur résidu atmosphérique Boscan. Cette charge permet d'évaluer la rétention en métaux du catalyseur. La conduite du test vise à maintenir un taux d'HDM compris entre 80 et 60 %. Pour cela, on maintient la température réactionnelle à 410°C. On arrête le test lorsque le taux d'HDM chute en dessous de 60 %. La conversion est maintenue entre 50 et 60 % pds afin d'obtenir une bonne stabilité du fuel. Pour évaluer la stabilité des produits formés, une mesure selon la méthode « P value Shell » est effectuée sur la fraction 350°C + de l'effluent récupéré après test.

Le tableau 6 compare la performance des catalyseurs A, B en début de test (1,6 bbl/lb) ainsi qu'en fin de test (4,1 bbl/lb).

Tableau 6

| Catalyseur + Age | Conv (%pds) | HDM (% pds) | Rétention en métaux (% pds) | P value Shell |
|---|---|---|---|---|
| A à 1,6 bbl/lb, RSV Safaniya | 49 | 52 | 7,6 | 1,4 |
| B à 1,6 bbl/lb RSV Saf | 54 | 55 | 8,1 | 1,4 |
| A à 4,1 bbl/lb RA Boscan | 51 | 60 | 70 | 1,2 |
| B à 4,1 bbl/lb RA Boscan | 56 | 70 | 100 | 1,4 |

Il apparaît que le catalyseur dopé au phosphore (catalyseur B) de la présente invention permettent d'atteindre un taux de conversion de la fraction 550°C+ plus important que le catalyseur non dopé au phosphore (catalyseur A) tout en conduisant à des produits stables. Le catalyseur B présente des performances en hydrodémétallation et en rétention nettement améliorées par rapport au catalyseur A.

**Revendications**

1. Procédé d'hydrotraitement et/ou d'hydroconversion en lit fixe ou en lit bouillonnant de charges hydrocarbonées contenant des métaux, en présence d'un catalyseur comprenant un support sous forme de billes à base d'alumine, au moins un métal catalytique ou un composé de métal catalytique du groupe VIB (colonne 6 de la nouvelle notation de la table périodique des éléments), dont la structure poreuse se compose d'une pluralité d'agglomérats juxtaposés, formés chacun d'une pluralité de plaquettes aciculaires, les plaquettes de chaque agglomérat étant orientées généralement radialement les unes vis-à-vis des autres et par rapport au centre de l'agglomérat, ledit catalyseur renfermant en outre du phosphore comme élément dopant, la teneur en phosphore, exprimée en % poids d'oxyde par rapport au poids du catalyseur final, est comprise entre 0,3 et 10 %.

2. Procédé selon la revendication 1 telle que ledit catalyseur comprend au moins un métal catalytique ou un composé de métal catalytique du groupe VIII (colonnes 8, 9 et 10 de la nouvelle notation de la table périodique des éléments).

3. Procédé selon l'une des revendications 1 ou 2 telle que ledit catalyseur présente une teneur en métal du groupe VIB, exprimée en % poids d'oxyde par rapport au poids du catalyseur final, comprise entre 1 et 20 % et une teneur en métal du groupe VIII, exprimée en % poids d'oxyde par rapport au poids du catalyseur final, comprise entre 0 et 10 %.

4. Procédé selon la revendication 3 telle que ledit catalyseur présente une teneur en métal du groupe VIB comprise entre 1 et 10 % poids d'oxyde.

5. Procédé selon l'une des revendications précédentes telles que ledit catalyseur présente une distribution poreuse, déterminée par la technique de porosimétrie au Hg, et **caractérisée** comme suit :

   - % du volume poreux total en pores de diamètre moyen inférieur à 100 Å: entre 0 et 10
   - % du volume poreux total en pores de diamètre moyen compris entre 100 et 1000 Å : entre 40 et 90
   - % du volume poreux total en pores de diamètre moyen compris entre 1000 et 5000 Å : entre 5 et 60
   - % du volume poreux total en pores de diamètre moyen compris entre 5000 et 10000 Å : entre 5 et 50
   - % du volume poreux total en pores de diamètre moyen supérieur à 10000 Å : entre 5 et 20.

6. Procédé selon l'une des revendications précédentes telle que ledit catalyseur présente une densité de remplissage tassé est comprise entre 0,35 et 0,80 g/cm$^3$ et un volume poreux total, déterminé par porosimétrie au mercure, compris entre 0,4 et 1,8 g/cm$^3$.

7. Procédé selon l'une des revendications précédentes telle que ledit catalyseur présente un diamètre des pores à $V_{Hg/2}$ compris entre 300 et 700 Å.

8. Procédé selon l'une des revendications 2 à 7 telle que ledit catalyseur comprend du molyddène comme élément du groupe VIB et du nickel comme élément du groupe VIII.

9. Procédé selon l'une des revendications précédentes telle que ledit catalyseur présente une taille des billes comprise entre 0.5 et 20 mm.

10. Procédé selon l'une des revendications précédentes telle que ledit catalyseur présente une taille des billes comprise entre 1 et 6 mm.

11. Procédé selon l'une des revendications précédentes telle que ledit catalyseur est préparé selon les étapes suivantes :

    a) on traite des billes d'alumine active dans un milieu aqueux constitué d'un mélange d'au moins un acide permettant de dissoudre au moins une partie de l'alumine des billes et d'au moins un composé apportant un anion capable de se combiner avec les ions aluminium en solution, ce dernier composé étant un individu chimique distinct de l'acide précité,
    b) on soumet simultanément ou subséquemment les billes ainsi traitées à un traitement à une température comprise entre 80°C et 250°C pendant une période comprise entre quelques minutes et 36 heures.

c) on sèche éventuellement les billes et on les soumet à une activation thermique à une température comprise entre 500°C et 1100°C.

d) on introduit sur le support au moins un élément dopant choisi dans le groupe formé par le bore, le phosphore, le silicium et les éléments du groupe VIIA (halogènes), au moins un élément du groupe VIB et éventuellement au moins un élément du groupe VIII.

12. Procédé selon la revendication 11 telle que ladite étape d) est effectuée par imprégnation des éléments choisis sur le support.

13. Procédé selon la revendication 12 telle que ladite imprégnation est suivie des étapes suivantes :

- on laisse reposer le solide humide sous une atmosphère humide à une température comprise entre 10 et 80°C,
- on sèche le solide humide obtenu à une température comprise entre 60 et 150°C,
- on calcine éventuellement le solide obtenu après séchage à une température comprise entre 150 et 800°C.

14. Procédé selon l'une des revendications 11 à 13 telle que la préparation dudit catalyseur est suivie d'un traitement de sulfuration du catalyseur.

15. Procédé selon l'une des revendications précédentes telle que lesdites charges hydrocarbonées contenant des métaux sont choisies parmi les résidus atmosphériques, les résidus sous vide issus de distillation directe, les huiles désasphaltées, les résidus issus de procédés de conversion du coking, d'une hydroconversion en lit fixe, d'une hydroconversion en lit bouillonnant ou d'une hydroconversion en lit mobile, utilisées telles quelles ou encore diluées par une fraction hydrocarbonée ou un mélange de fractions hydrocarbonées.

16. Procédé selon l'une des revendications précédentes telle que la conversion desdites charges est réalisée en présence de charbon.

17. Procédé selon l'une des revendications précédentes opérant en lit fixe.

18. Procédé selon l'une des revendications précédentes opérant en lit bouillonnant.

**Claims**

1. Fixed bed or ebullated bed hydroconversion and/or hydrotreatment. process of metal containing hydrocarbon fractions, in presence of a catalyst comprising a support in the form of beads based on alumina, at least one catalytic metal or a compound of a catalytic metal from group VIB (column 6 in the new periodic table notation), with a pore structure composed of a plurality of juxtaposed agglomerates, each formed by a plurality of acicular platelets, the platelets of each agglomerate being generally radially orientated with respect to each other and with respect to the center of the agglomerate, said catalyst also comprising phosphorus as doping element, the phosphorus content, expressed in % by weight of oxide with respect to the final catalyst weight, is in the range 0.3% to 10%.

2. Process according to claim 1 in which the catalyst comprises at least one catalytic metal or a compound of a catalytic metal from group VIII (columns 8, 9 and 10 of the new periodic table notation).

3. Process according to claim 1 or claim 2 in which the catalyst displays an amount of metal from group VIB, expressed as the % by weight of oxide with respect to the final catalyst weight, in the range 1% to 20% and in which the amount of metal from group VIII, expressed as the % by weight of oxide with respect to the final catalyst weight, in the range 0 to 10%.

4. Process according to one of the preceding claims in which the catalyst displays an amount of metal from group VIB is in the range 1% to 10% by weight of oxide.

5. Process according to one of the preceding claims in which the catalyst displays a pore distribution, determined by Hg porosimetry, is **characterized** as follows:

• % of total pore volume as pores with a mean diameter of less than 100 Å: between 0 and 10;
• % of total pore volume as pores with a mean diameter in the range 100 to 1000 Å: between 40 and 90;

- % of total pore volume as pores with a mean diameter in the range 1000 to 5000 Å: between 5 and 60;
- % of total pore volume as pores with a mean diameter in the range 5000 to 10000 Å: between 5 and 60;
- % of total pore volume as pores with a mean diameter of more than 10000 Å: between 5 and 20.

6. Process according to one of the preceding claims in which the catalyst displays a compact packing density is in the range 0.35 to 0.80 g/cm$^3$ and the total pore volume, determined by mercury porosimetry, is in the range 0.4 to 1.8 g/cm$^3$.

7. Process according to one of the preceding claims in which the catalyst displays a pore diameter at $V_{Hg/2}$ is in the range 300 Å to 700 Å.

8. Process according to one of the preceding claims in which the catalyst comprises molybdenum as the group VIB element is and nickel as the element of the group VIII.

9. Process according to one of the preceding claims in which the catalyst displays a bead size in the range 0.5 to 20 mm.

10. Process according to one of the preceding claims in which the catalyst displays a bead size in the range 1 to 6 mm.

11. Process according to one of the preceding claims in which the catalyst is prepared according to the following steps :

a) treating the active alumina beads in an aqueous medium constituted by a mixture of at least one acid that can dissolve at least a portion of the alumina of the beads and at least one compound which supplies an anion which is capable of combining with aluminum ions in solution, the latter compound being a chemical species which is distinct from said acid;
b) simultaneously or subsequently, subjecting the treated beads to a treatment at a temperature in the range 80°C to 250°C for a period in the range from a few minutes to 36 hours;
c) optionally, drying the beads and subjecting them to thermal activation at a temperature in the range 500°C to 1100°C;
d) introducing into the support at least one doping element selected from the group formed by boron, phosphorus, silicon and elements from group VIIA (halogens), at least one element from group VIB and optionally at least one element from group VIII.

12. Process according to claim 11 in which step d) is carried out by impregnating the selected elements into the support.

13. Process according to claim 12 in which impregnation is followed by the following steps:

- leaving the moist solid in a moist atmosphere at a temperature in the range 10°C to 80°C;
- drying the moist solid obtained at a temperature in the range 60°C to 150°C;
- optionally, calcining the solid obtained after drying at a temperature in the range 150°C to 800°C.

14. Process according to one of claim 11 to 13 in which the preparation of said catalyst is followed by a catalyst sulfurization treatment.

15. Process according to one of the preceding claims in which said metal containing feed are selected from atmospheric residues, straight run vacuum residues, deasphalted oils, residues from coking conversion, from fixed bed hydroconversion, from ebullated bed hydroconversion or from moving bed hydroconversion processes, used as is or diluted with a hydrocarbon fraction or a mixture of hydrocarbon fractions.

16. Process according to one of the preceding claims in which the conversion of said feed is realized in presence of coal.

17. Process according to one of the preceding claims in which said process operates in fixed bed.

18. Process according to one of the preceding claims in which said process operates in ebullated bed.

**Patentansprüche**

1. Verfahren zur Hydrobehandlung und/oder Hydrokonversion im Festbett oder im wallenden Bett von Metall enthaltenden Kohlenwasserstoffbeschickungen, in Gegenwart eines Katalysators, der einen Träger in Form von Kügelchen, die auf Aluminiumoxid basieren, mindestens ein katalytisches Metall oder eine Verbindung aus einem katalytischen Metall der Gruppe VIB (Spalte 6 der neuen Notation des Periodensystems der Elemente) umfasst, dessen Porenstruktur sich aus einer Vielzahl von juxtaponierten Agglomeraten zusammensetzt, die jeweils aus einer Vielzahl von nadelförmigen Plättchen gebildet werden, wobei die Plättchen jedes Agglomerats im Allgemeinen gegeneinander und bezogen auf das Zentrum des Agglomerats radial ausgerichtet sind, wobei der Katalysator außerdem Phosphor enthält, der, ausgedrückt in Gew.-% des Oxids bezogen auf das Gewicht des fertigen Katalysators, im Bereich zwischen 0,3 und 10 % liegt.

2. Verfahren nach Anspruch 1, wobei der Katalysator mindestens ein katalytisches Metall oder eine Verbindung aus einem katalytischen Metall der Gruppe VIII (Spalten 8, 9 und 10 der neuen Notation des Periodensystems der Elemente) umfasst.

3. Verfahren nach einem der Ansprüche 1 oder 2, wobei der Katalysator einen Gehalt an Metall der Gruppe VIB, ausgedrückt in Gew.-% des Oxids bezogen auf den fertigen Katalysator, im Bereich zwischen 1 und 20 % und einen Gehalt an Metall der Gruppe VIII, ausgedrückt in Gew.-% des Oxids bezogen auf das Gewicht des fertigen Katalysator, im Bereich zwischen 0 und 10 % aufweist.

4. Verfahren nach Anspruch 3, wobei der Katalysator einen Gehalt an Metall der Gruppe VIB im Bereich zwischen 1 und 10 Gew.-% des Oxids aufweist.

5. Verfahren nach einem der vorhergehenden Ansprüche, wobei der Katalysator eine Porenverteilung aufweist, bestimmt mittels der Technik der Hg-Porosimetrie, die wie folgt **gekennzeichnet** ist:

- % des gesamten Porenvolumens an Poren mit einem mittleren Durchmesser kleiner als 100 Å: zwischen 0 und 10
- % des gesamten Porenvolumens an Poren mit einem mittleren Durchmesser im Bereich zwischen 100 und 1000 Å: zwischen 40 und 90
- % des gesamten Porenvolumens an Poren mit einem mittleren Durchmesser im Bereich zwischen 1000 und 5000 Å: zwischen 5 und 60
- % des gesamten Porenvolumens an Poren mit einem mittleren Durchmesser im Bereich zwischen 5.000 und 10.000 Å: zwischen 5 und 50
- % des gesamten Porenvolumens an Poren mit einem mittleren Durchmesser größer als 10.000 Å: zwischen 5 und 20.

6. Verfahren nach einem der vorhergehenden Ansprüche, wobei der Katalysator eine Kompaktpackungsdichte im Bereich zwischen 0,35 und 0,80 $g/cm^3$ und ein gesamtes Porenvolumen, bestimmt mittels Quecksilberporosimetrie, im Bereich zwischen 0,4 und 1,8 $g/cm^3$ aufweist

7. Verfahren nach einem der vorhergehenden Ansprüche, wobei der Katalysator einen Porendurchmesser bei $V_{Hg/2}$ im Bereich zwischen 300 und 700 Å aufweist.

8. Verfahren nach einem der Ansprüche 2 bis 7, wobei der Katalysator Molybdän als Element der Gruppe VIB und Nickel als Element der Gruppe VIII umfasst.

9. Verfahren nach einem der vorhergehenden Ansprüche, wobei der Katalysator eine Größe der Kügelchen im Bereich zwischen 0,5 und 20 mm aufweist.

10. Verfahren nach einem der vorhergehenden Ansprüche, wobei der Katalysator eine Größe der Kügelchen im Bereich zwischen 1 und 6 mm aufweist.

11. Verfahren nach einem der vorhergehenden Ansprüche, wobei der Katalysator gemäß den folgenden Schritten hergestellt wird:

a) Aktive Aluminiumoxid-Kügelchen werden in einem wässrigen Medium behandelt, das aus einem Gemisch aus mindestens einer Säure besteht, die es ermöglicht, mindestens einen Teil des Aluminiumoxids der Kügelchen und mindestens eine Verbindung aufzulösen, die ein Anion einbringt, das in der Lage ist, sich mit den Aluminiumionen in Lösung zu kombinieren, wobei letztgenannte Verbindung eine chemische Spezies ist, die sich von der zuvor zitierten Säure unterscheidet,

b) die so behandelten Kügelchen werden gleichzeitig oder hintereinander einer Behandlung bei einer Temperatur im Bereich zwischen 80 °C und 250 °C während eines Zeitraums im Bereich zwischen einigen Minuten und 36 Stunden unterzogen.

c) Die Kügelchen werden gegebenenfalls getrocknet und sie werden einer thermischen Aktivierung bei einer Temperatur im Bereich zwischen 500 °C und 1.100 °C unterzogen.

d) In den Träger wird mindestens ein dotierendes Element eingeführt, ausgewählt aus der Gruppe, gebildet aus Bor, Phosphor, Silicium und den Elementen der Gruppe VIIA (Halogene), mindestens einem Element der Gruppe VIB und gegebenenfalls mindestens einem Element der Gruppe VIII.

12. Verfahren nach Anspruch 11, wobei der Schritt d) mittels Imprägnierung der ausgewählten Elemente auf den Träger ausgeführt wird.

13. Verfahren nach Anspruch 12, wobei auf die Imprägnierung folgende Schritte folgen:

- Der feuchte Feststoff wird unter einer feuchten Atmosphäre bei einer Temperatur im Bereich zwischen 10 und 80 °C ruhen gelassen,
- der erhaltene feuchte Feststoff wird bei einer Temperatur im Bereich zwischen 60 und 150 °C getrocknet,
- der nach der Trocknung erhaltene Feststoff wird gegebenenfalls bei einer Temperatur im Bereich zwischen 150 und 800 °C kalziniert.

14. Verfahren nach einem der Ansprüche 11 bis 13, wobei auf die Herstellung des Katalysators eine Schwefelbehandlung des Katalysators folgt.

15. Verfahren nach einem der vorhergehenden Ansprüche, wobei die Metall enthaltenden Kohlenwasserstoffbeschikkungen ausgewählt sind aus atmosphärischen Rückständen, Vakuumrückständen aus der Direktdestillation, entasphaltierten Ölen, Rückständen aus Verfahren zur Verkokungskonversion, einer Hydrokonversion im Festbett, einer Hydrokonversion im wallenden Bett oder einer Hydrokonversion im Bewegtbett, die wie sie sind verwendet werden oder auch verdünnt mit einer Kohlenwasserstofffraktion oder einem Gemisch aus Kohlenwasserstofffraktionen.

16. Verfahren nach einem der vorhergehenden Ansprüche, wobei die Konversion der Beschickungen in Gegenwart von Kohle ausgeführt wird.

17. Verfahren nach einem der vorhergehenden Ansprüche, das im Festbett erfolgt.

18. Verfahren nach einem der vorhergehenden Ansprüche, das im wallenden Bett erfolgt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1364707 A1
- FR 2839902
- US 5089463 A
- EP 1060794 A
- US 5827421 A
- US 4880525 A
- US 6656349 B1
- US 5397456 A
- US 4552650 A
- FR 2764213
- US 6043187 A
- FR 2787040
- FR 1438497
- FR 1108011
- US 4061594 A
- US 4874506 A
- US 4437973 A
- US 4521295 A
- US 4495060 A

**Littérature non-brevet citée dans la description**

- Catalyst Deactivation through Pore Mouth Plugging. *5ème symposium international sur le génie de la réaction chimique,* Mars 1978
- Effects of Feed Metals on Catalyst Aging in Hydroprocessing Residuum. Industrial Engineering Chemistrv Process Design and Development. American Chemical Society, 1981, vol. 20, 262-273
- Effect of Catalyst Pore Structure on hydroTreating of Heavy Oil. *congrès national de l'American Chemical Society,* 03 Mars 1982